# EUROPÄISCHE PATENTANMELDUNG

(11) **EP 4 644 144 A1**
(43) Veröffentlichungstag der Anmeldung: **05.11.2025**
(21) Anmeldenummer: 25174084.1
(22) Anmeldetag: 02.05.2025
(51) Int. Cl.: B60J 5/04

(54) **NUTZFAHRZEUG MIT HERAUSFAHRBARER ÜBERDACHUNG**

(30) Priorität: 02.05.2024 DE 102024112382
(71) Anmelder: CubicCube GmbH, 76287 Rheinstetten (DE)
(72) Erfinder: Zawisla, Andreas Roman, 76137 Karlsruhe (DE); Rittmann, Frank, 76189 Karlsruhe (DE)
(74) Vertreter: Mertzlufft-Paufler, Cornelius

(57) **Zusammenfassung**

Die Erfindung schlägt ein Nutzfahrzeug (1) mit einem Aufbau (3) vor, der eine Öffnung (4) aufweist. Aus der Öffnung (4) ist eine Überdachung (5) herausfahrbar (vgl. Fig. 1).

## Beschreibung

Die Erfindung betrifft ein Nutzfahrzeug mit einem einen Laderaum umschließenden Aufbau. Solche Nutzfahrzeuge sind in der Praxis bekannt.

Der Erfindung liegt die Aufgabe zugrunde, für ein Nutzfahrzeug eine Überdachung bereitzustellen, die beispielsweise als Sonnen- und/oder Regenschutz dienen kann. Dies ist insbesondere für Nutzer des Nutzfahrzeugs hilfreich, die unter dieser Überdachung Arbeiten durchführen können.

Zur Lösung dieser Aufgabe schlägt die Erfindung die Merkmale von Anspruch 1 vor. Insbesondere wird somit erfindungsgemäß bei einem Nutzfahrzeug der eingangs beschriebenen Art vorgeschlagen, dass der Aufbau eine Öffnung umfasst, aus der eine Überdachung herausfahrbar ist.

Der Aufbau kann dabei als Karosserie ausgebildet sein. Die Öffnung kann an einer Heckseite des Aufbaus ausgebildet sein. Die Öffnung kann hierbei bei einem modularen Aufbau in einem Deckenmodul und/oder in einem Heckmodul ausgebildet sein.

Beispielsweise kann das Nutzfahrzeug für Rohr- oder Kanalarbeiten verwendet werden wie etwa zur der Rohr- und/oder Kanalinspektion. Die Überdachung kann dabei über die Rohr- oder Kanalöffnung herausgefahren werden, welche Zugang zu dem zu inspizierenden Rohr bzw. Kanal gibt. So können erforderliche Arbeiten vor Sonne und/oder Regen geschützt durchgeführt werden.

Bevorzugt ist die Überdachung heckseitig aus der Öffnung herausfahrbar.

Die Überdachung kann beispielsweise aus Metall sein. Sie kann jedoch auch aus einem anderen festen oder flexiblen Material ausgebildet sein.

Bei einer vorteilhaften Ausführung kann vorgesehen sein, dass ein Querschnitt der Überdachung eine zu einem Querschnitt der Öffnung inverse Kontur aufweist. So kann die Überdachung passgenau in der Öffnung liegen, was zu einer erhöhten Stabilität des Aufbaus beitragen kann.

Bevorzugt weist die Kontur eine Stufenform auf. So kann die Überdachung an mehreren Flächen in der Öffnung liegen.

Es kann vorgesehen sein, dass ein Querschnitt der Überdachung, insbesondere der zuvor erwähnte Querschnitt, über einen Teil oder über eine gesamte Strecke der Überdachung, die beim Ein- und Ausfahren der Überdachung in die Öffnung ein- oder austritt, ganz oder im Wesentlichen gleichbleibt. Im Wesentlichen gleich bedeutet, dass ein Spiel zwischen der Überdachung und der Öffnung durch bestehende Abweichungen nicht erhöht wird.

Bei einer weiteren vorteilhaften Ausführung kann vorgesehen sein, dass die Öffnung an einem heckseitigen Ende des Aufbaus angeordnet ist. So kann das Nutzfahrzeug komfortabel an die jeweilige Arbeitsstelle, beispielsweise eine Öffnung eines zu inspizierenden Rohres oder Kanals, herangefahren werden.

Bei einer weiteren vorteilhaften Ausführung kann vorgesehen sein, dass die Überdachung mittels eines Antriebs herausfahrbar ist. Der Antrieb kann ein elektrischer Antrieb oder ein hydraulischer Antrieb oder ein sonstiger Antrieb sein. Mit einem Antrieb kann ein Benutzer die Überdachung besonders komfortabel herausfahren.

Bei einer weiteren vorteilhaften Ausführung kann vorgesehen sein, dass der Antrieb eine Stange bewegt, welche, insbesondere mit einem Ende, an der Überdachung befestigt ist. Somit kann die Kraftübertragung zwischen Antrieb und Überdachung über die Stange stattfinden.

Bei einer weiteren vorteilhaften Ausführung kann vorgesehen sein, dass die Überdachung ein Endstück aufweist. Das Endstück ist bevorzugt nach unten geneigt. Das Endstück kann dabei in einem beliebigen Winkel schräg nach unten neigen oder auch senkrecht nach unten neigen. In einem ausgefahrenen Zustand der Überdachung kann das Endstück als Schutz gegen seitlich einfallenden Regen und/oder seitlich einfallende Sonnenstrahlen dienen. Das Endstück ist bevorzugt als Platte ausgebildet. Die Platte ist bevorzugt eben ausgebildet. Die Platte kann beispielsweise ein Blech sein. Das Endstück kann rechteckig ausgebildet sein. Das Endstück kann einen Querschnitt der Überdachung vollständig abdecken. Das Endstück kann über einen Querschnitt der Überdachung an einer oder an allen Seiten überstehen.

Bevorzugt deckt das Endstück in einem eingefahrenen Zustand der Überdachung die Öffnung zumindest teilweise ab. Dadurch kann ein hinter der Öffnung sich befindender Innenraum vor Regen und/oder sonstigen äußeren Wettereinflüssen geschützt werden. Bevorzugt schließt eine Außenseite des Endstücks im eingefahrenen Zustand der Überdachung bündig an einer Außenseite einer Wandung des Aufbaus an.

Bei einer weiteren vorteilhaften Ausführung kann vorgesehen sein, dass an dem Aufbau über der Öffnung eine Regenrinne angebracht ist. So kann verhindert werden, dass Regen in die Öffnung eindringt. Bevorzugt steht hierbei die Regenrinne gegenüber einem Endstück, insbesondere gegenüber dem zuvor erwähnten Endstück, in einem eingefahrenen Zustand der Überdachung vor.

Bei einer weiteren vorteilhaften Ausführung kann vorgesehen sein, dass innerhalb des Aufbaus hinter der Öffnung ein Führungselement für die Überdachung angebracht ist. Es können ein oder auch mehrere Führungselemente angebracht sein. Als Führungselement kann beispielsweise eine Führungsschiene, vorzugsweise eine Teleskopschiene, in Betracht kommen. Damit kann die Ausfahrbewegung der Überdachung gleichmäßig eingestellt werden.

Bei einer weiteren vorteilhaften Ausführung kann vorgesehen sein, dass an der Überdachung, insbesondere an einem Endstück der Überdachung, beispielsweise an dem zuvor erwähnten Endstück, eine Hintergreifung ausgebildet ist, welche in einem eingefahrenen Zustand der Überdachung ein feststehendes Teil des Aufbaus hintergreift. Bei der Hintergreifung kann es sich beispielsweise um ein ebenes Element handeln, welches parallel zu einer Ausfahrebene der Überdachung ausgebildet ist. Wird die Überdachung nach hinten herausgefahren, so ist die Ausfahrebene eine horizontal verlaufende Ebene. Die Hintergreifung kann aus Metall sein. Die Hintergreifung kann die Überdachung im eingefahrenen Zustand zusätzlich fixieren.

Die Erfindung wird nun anhand von Ausführungsbeispielen näher beschrieben, ist jedoch nicht auf diese Ausführungsbeispiele beschränkt. Weitere Ausführungsbeispiele ergeben sich durch Kombination der Merkmale einzelner oder mehrerer Ansprüche untereinander und/oder mit einzelnen oder mehreren Merkmalen der Ausführungsbeispiele.

Es zeigt:
- Fig. 1: ein erfindungsgemäßes Nutzfahrzeug mit Aufbau,
- Fig. 2: ein erfindungsgemäßes Nutzfahrzeug mit Aufbau in einer Ansicht von unten,
- Fig. 3: eine Detailansicht einer Überdachung,
- Fig. 4: eine Detailansicht einer Überdachung aus einer Sicht von unten,
- Fig. 5: das Nutzfahrzeug mit Aufbau aus Fig. 1 mit eingefahrener Überdachung.

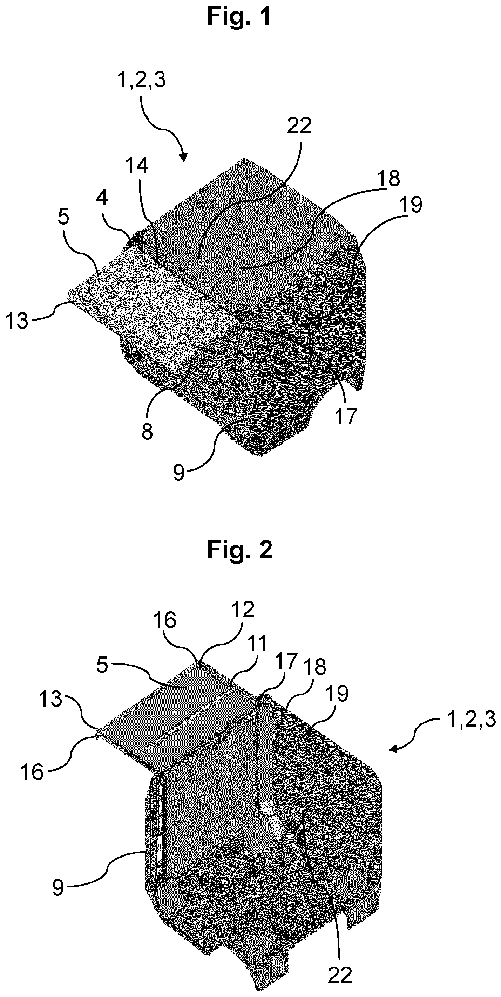

In den Fig. 1 und 2 ist ein Ausschnitt eines Nutzfahrzeugs 1 zu sehen. Der Aufbau 3 umschließt dabei einen Laderaum **2.** Aus einer Öffnung 4, die an einem heckseitigen Ende 9 des Aufbaus 3 angeordnet ist, ist eine Überdachung 5 ausgefahren worden.

Die Überdachung 5 weist ein nach unten geneigtes, schräges Endstück 13 auf. Diese dient als Regenschutz. Die Überdachung 5 weist eine Kontur 8 auf, welche eine inverse Kontur der Öffnung 4 darstellt.

Das Nutzfahrzeug 1 weist einen modularen Aufbau 3 auf, welcher ein Deckenmodul 18 und ein Heckmodul 19 aufweist. Die Öffnung 4 ist in dem hier gezeigten Ausführungsbeispiel in dem Deckenmodul 18 ausgebildet.

Weiter weist der Aufbau 3 eine Regenrinne 14 auf, die ein Eindringen von Wasser in die Öffnung 4 verhindern soll.

Eine Stange 11 ist mit einem Ende 12 an der Überdachung 5 befestigt. Ein nicht gezeigter Antrieb bewegt die Stange 11 und damit auch die Überdachung 5.

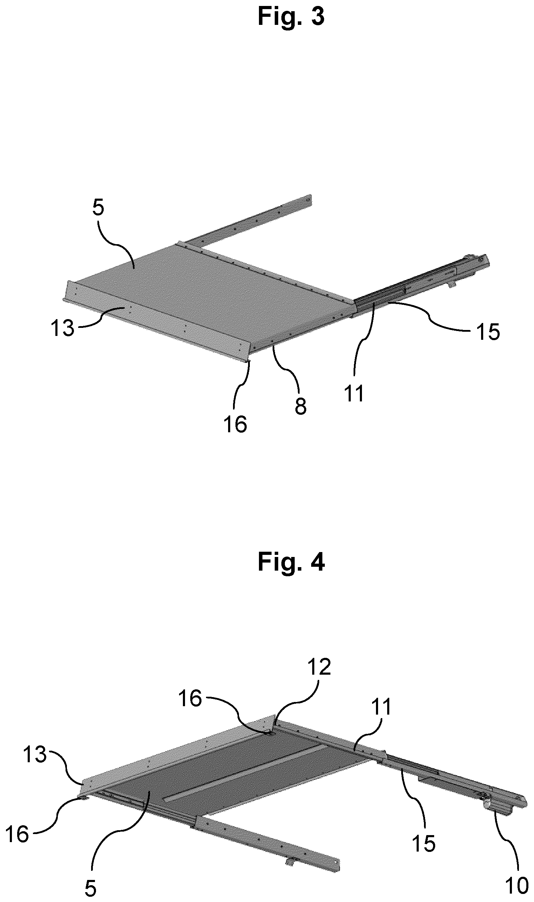

In den Fig. 3 und 4 ist eine Detailansicht der in den Fig. 1 und 2 gezeigten Überdachung 5 mit zugehörigem Führungselement 15, welches eine Schiene ist, dargestellt.

Ein Antrieb 10, welcher ein Elektromotor ist, treibt die Stange 11 an und kann so die Überdachung 5 ein- und ausfahren. An dem als Platte ausgebildeten Endstück 13 der Überdachung 5 ist eine als Metallplatte ausgebildete Hintergreifung 16 angebracht, welche in einem eingefahrenen Zustand der Überdachung 5 ein feststehendes Teil 17 des Aufbaus 3 hintergreift.

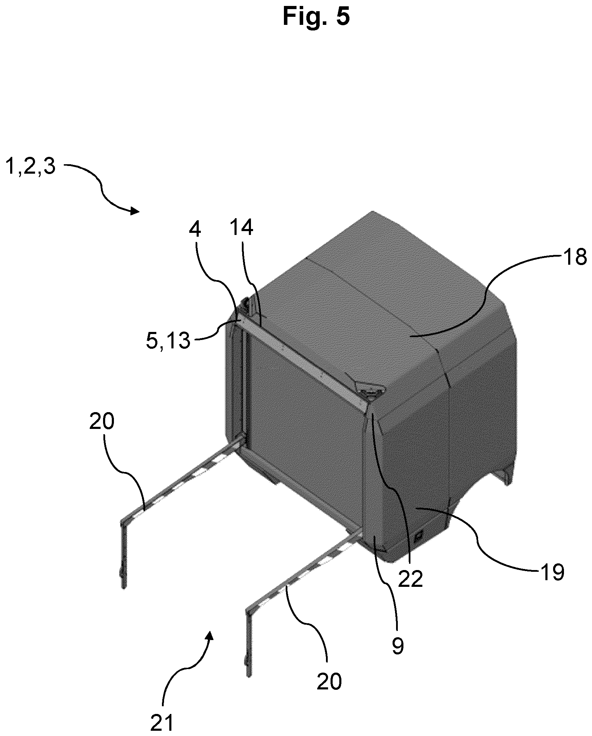

In Fig. 5 ist derselbe Ausschnitt eines Nutzfahrzeugs 1 wie in Fig. 1 zu sehen, jedoch ist die Überdachung 5 in diesem Ausführungsbeispiel in einem eingefahrenen Zustand gezeigt. Das Endstück 13 der Überdachung 5 verdeckt dabei die Öffnung 4 und schützt diese damit vor Regen. Die Außenseite des Endstücks 13 liegt hierbei bündig an einer heckseitigen Außenseite der Wandung 22 des Aufbaus 3 an.

Weiter ist zu sehen, dass aus dem Aufbau 3 zwei Absperrelemente 20 herausgeklappt wurden, welche einen Arbeitsbereich 21 absperren, um aus Sicherheitsgründen den Zugang von Menschen zu dem Arbeitsbereich 21 zu verhindern.

Die Erfindung schlägt ein Nutzfahrzeug 1 mit einem Aufbau 3 vor, der eine Öffnung 4 aufweist. Aus der Öffnung 4 ist eine Überdachung 5 herausfahrbar.

### Bezugszeichenliste

- 1: Nutzfahrzeug
- 2: Laderaum
- 3: Aufbau
- 4: Öffnung
- 5: Überdachung
- 8: Kontur
- 9: Heckseitiges Ende (von 3)
- 10: Antrieb
- 11: Stange
- 12: Ende (von 11)
- 13: Endstück (von 5)
- 14: Regenrinne
- 15: Führungselement
- 16: Hintergreifung
- 17: Teil (von 3)
- 18: Deckenmodul
- 19: Heckmodul
- 20: Absperrelement
- 21: Arbeitsbereich
- 22: Wandung

## Patentansprüche

1. Nutzfahrzeug (1) mit einem einen Laderaum (2) umschließenden Aufbau (3), wobei der Aufbau (3) eine Öffnung (4) umfasst, aus der eine Überdachung (5), vorzugsweise heckseitig, herausfahrbar ist.

2. Nutzfahrzeug (1) nach dem vorangehenden Anspruch, wobei ein Querschnitt der Überdachung (5) eine zu einem Querschnitt der Öffnung (4) inverse Kontur (8) aufweist.

3. Nutzfahrzeug (1) nach einem der vorangehenden Ansprüche, wobei die Öffnung (4) an einem heckseitigen Ende (9) des Aufbaus (3) angeordnet ist.

4. Nutzfahrzeug (1) nach einem der vorangehenden Ansprüche, wobei die Überdachung (5) mittels eines Antriebs (10) herausfahrbar ist.

5. Nutzfahrzeug (1) nach dem vorangehenden Anspruch, wobei der Antrieb (10) eine Stange (11) bewegt, welche, insbesondere mit einem Ende (11), an der Überdachung (5) befestigt ist.

6. Nutzfahrzeug (1) nach einem der vorangehenden Ansprüche, wobei die Überdachung (5) ein, insbesondere nach unten geneigtes, Endstück (13), das vorzugsweise als Platte ausgebildet ist, aufweist, insbesondere wobei das Endstück (13) in einem eingefahrenen Zustand der Überdachung (5) die Öffnung (4) zumindest teilweise abdeckt.

7. Nutzfahrzeug (1) nach einem der vorangehenden Ansprüche, wobei an dem Aufbau (3) über der Öffnung (4) eine Regenrinne (14) angebracht ist, insbesondere wobei die Regenrinne (14) gegenüber einem oder dem Endstück (13) in einem eingefahrenen Zustand der Überdachung (5) vorsteht.

8. Nutzfahrzeug (1) nach einem der vorangehenden Ansprüche, wobei innerhalb des Aufbaus (3) hinter der Öffnung (4) ein Führungselement (15), vorzugsweise eine Führungsschiene, für die Überdachung (5) angebracht ist.

9. Nutzfahrzeug (1) nach einem der vorangehenden Ansprüche, **dadurch gekennzeichnet, dass** an der Überdachung (5), insbesondere an einem oder dem Endstück (13) der Überdachung (5), eine Hintergreifung (16) ausgebildet ist, welche in einem eingefahrenen Zustand der Überdachung (5) ein feststehendes Teil (17) des Aufbaus (3) hintergreift.
